# EUROPEAN PATENT APPLICATION

(11) **EP 4 755 570 A1**
(43) Date of publication of application: **10.06.2026**
(21) Application number: 25219406.3
(22) Date of filing: 28.11.2025
(51) Int. Cl.: B23K 37/04, B62K 19/20

(54) **JIGS FOR THE PRODUCTION OF ALUMINIUM BICYCLE FRAMES AND SYSTEM AND PROCESS FOR PRODUCING BICYCLE FRAMES USING THE SAME**

(30) Priority: 29.11.2024 PT 2024119867
(71) Applicant: Triangle's - Cycling Equipments, S.A., 3750-860 Borralha - Agueda (PT)
(72) Inventor: DA SILVA CRUZ, RICARDO EMANUEL, 3810-232 SÃO BERNARDO, AVEIRO (PT); SÁ REIS, JOÃO FILIPE, 4520-401 MOSTEIRÔ VFR (PT); PEREIRA MESSIAS, SOFIA ALEXANDRA, 2825-516 CAPARICA (PT); FERREIRA SIMÕES, TIAGO, 3770-059 OIÃ, OLIVEIRA DO BAIRRO (PT); DUARTE CARDOSO, CÉSAR FILIPE, 3830-126 SÃO SALVADOR - ÍLHAVO (PT)
(74) Representative: RCF - Protecting Innovation, S.A.

(57) **Abstract**

The present invention relates to jigs for the production of aluminium bicycle frames. Therefore, the welding jig (10) comprises: a base structure (40); at least one displaceable tube gripping module (41) and a displacement interface member (42) for each displaceable tube gripping module (41), wherein said displacement interface member (42) is disposed between the base structure (40) and the respective displaceable gripping module (41) and attached thereto in such a way that, in operation, it provides spatial displacement, in three dimensions, of the displaceable gripping module (41) relative to the base structure (40). The invention also relates to a system and a process for producing bicycle frames using said jigs.

## Description

### FIELD OF THE INVENTION

The present invention relates to jigs developed for application in a new fully robotic welding process for the production of aluminium bicycle frames. The invention also relates to a system and a process for producing aluminium bicycle frames. The invention has application in the field of aluminium bicycle production, in particular in the production of aluminium bicycle frames.

### BACKGROUND OF THE INVENTION

The production of aluminium bicycle frames relies on mass welding processes in the bicycle manufacturing Industry.

However, the welding of the aluminium tubes of the frames relies on manual processes, which, in an industrial context, does not constitute best practice, primarily for reasons of production efficiency and the safety of the workers involved in these processes.

Currently, there are no solutions on the market specifically designed and applicable and/or adaptable to the automation of welding processes necessary for the production of bicycle frames in the aluminium bicycle sector.

There are problems and disadvantages associated with the essentially manual welding process for the production of aluminium bicycle frames, namely:
- The lack of a standard in the quality of the final product, both visually and in terms of the structural integrity and durability of the bicycle frame. This variation depends on factors inherent to the manual process, namely the welder's technical skill and experience in preparing the surfaces and controlling the process, often leading to weak points in the welds;
- Lack of expected repeatability in the mechanical distortions of the product due to welding. This phenomenon is due to the fact that aluminium is extremely conductive and sensitive to temperature and is easily damaged by heating during welding. Manual welding makes temperature control more challenging, increasing the risk of excessive variability in distortion or weakening of the material in mass production.
- The jigs developed for manual welding are quite rudimentary from a technical point of view, which means that the welding process for manufacturing the bicycle frame must be carried out in a large number of operational phases;
- The fact that the welding process involves multiple manual operations means that the product accumulates errors as well as a large dimensional variability;

This accumulation of errors is reflected in the final product, sometimes causing it to fall outside geometric specifications, thus resulting in a loss of quality, standardization, and repeatability of the process. It should be noted that these processes, when applied to Aluminium frames, present greater difficulties than in cases where the aim is to produce frames from other metal alloys, such as iron, for example, due to the different characteristics and behaviours of these different materials.

Therefore, there is a need in the art to develop technical solutions that allow us to solve the problems and disadvantages mentioned above regarding the production of aluminium bicycle frames.

### SUMMARY OF THE INVENTION

The present invention relates to jigs for the production of aluminium bicycle frames and to a production system and process using them.

Therefore, the welding jig (10, 20, 30) of the invention is characterized in that it comprises:
- a base structure (40);
- at least one displaceable tube gripping module (41) and
- a displacement interface member (42) for each displaceable tube gripping module (41),
wherein said displacement interface member (42) is disposed between the base structure (40) and the respective displaceable gripping module (41) and attached thereto in such a way that, in operation, it provides spatial displacement, in three dimensions, of the displaceable gripping module (41) relative to the base structure (40).

Preferably, the welding jig (10, 20, 30) further comprises at least one fixed tube gripping module (43).

In one embodiment, the welding jig (10, 20, 30) comprises an actuator (44) for each displacement interface member (42), wherein said actuator (44) is selected from the group consisting of manual, mechanical, hydraulic, electric actuators and combinations thereof.

In another embodiment, the welding jig (10, 20, 30) comprises a position sensor (46) for each actuator (44).

Preferably, the welding jig (10, 20, 30) further comprises at least one tube presence sensor (45).

Most preferably, the welding jig (10, 20, 30) comprises a data communication module connected to the tube presence (45) and position (46) sensors.

In yet another embodiment, the welding jig (10, 20, 30) comprises a cooling device, preferably a closed water or other coolant cooling device.

The present invention also relates to a system for producing aluminium bicycle frames, characterized in that it comprises:
- at least one welding jig (10, 20, 30) as claimed in any of claims 1 to 8;
- at least one welding robot
- at least one welding power source with peripherals thereof
- a processing and management device for starting or stopping the welding robot.

In a preferred embodiment, the aluminium bicycle frame production system comprises four welding jigs (10, 20, 20', 30), wherein:
- a first welding jig (10) comprises a fixed tube gripping module (43) and five or six displaceable gripping modules (41);
- a second welding jig (20) comprises eight or nine displaceable gripping modules (41);
- a third welding jig (20'), symmetrical to the second one, comprises eight or nine displaceable gripping modules (41) and
- a fourth welding jig (30) comprises a fixed tube gripping module (43) and at least three displaceable gripping modules (41). Preferably, the welding jig (30) comprises six displaceable gripping modules (41).

The invention also relates to a process for producing an aluminium bicycle frame (50). This process is carried out by the system described above and is characterized in that it comprises the following steps:
- Step 1: producing a front frame component (60), in a welding jig (10), by welding a handlebar tube (51), a lower tube (52), an upper tube (55), a saddle tube (54) and a crankset centre or motor receiving member (53);
- Step 2: producing a left rear frame component (71), in a welding jig (20), by welding a saddle tube (58), a rear wheel support member (57) and a chain tube (56);
- Step 3: producing a right rear frame component (71'), in a welding jig (20'), by welding a saddle tube (58'), a rear wheel support member (57') and a chain tube (56') and
- Step 4: producing the integral frame (50), in a welding jig (30), by welding the front component (60), left rear component (71) and right rear component (71').

Preferably, Steps 2 and 3 are performed simultaneously.

Most preferably, Steps 1, 2, and 3 are performed simultaneously.

### BRIEF DESCRIPTION OF THE DRAWINGS

The invention is described below with reference to the accompanying drawings, wherein:
Fig. 1 illustrates an exploded view of the elements that make up an example of an aluminium bicycle frame.
Fig. 2 shows the front component and rear component of the bicycle frame illustrated in Fig. 1.
Fig. 3 illustrates an embodiment of a jig for the production of the front component of the aluminium frame.
Fig. 4 illustrates one embodiment of a jig for the production of the rear component of the aluminium frame.
Fig. 5 illustrates one embodiment of a jig for joining the front component with the rear component of the aluminium frame.
Fig. 6 shows the jig from Fig. 3 subdivided into zones A, B, C, and D, to facilitate the description and its understanding.
Fig. 7 shows the jig from Fig. 4 subdivided into zones E and F, to facilitate the description and its understanding.
Fig. 8 shows the jig from Fig. 5 subdivided into zones G, H, and I, to facilitate the description and its understanding.

### DETAILED DESCRIPTION OF THE INVENTION

The present invention relates to jigs for the production of aluminium bicycle frames, as well as to a system and a process for producing bicycle frames using the jigs.

In the context of the present invention, the term "jig" refers to a mechanical structure that allows positioning, securing, and holding constituent members (for example, aluminium tubes) of a bicycle frame in a correct position, in order to guarantee the precision and consistency of an automated welding process, thereby ensuring that the final product meets the technical specifications defined by the industry.

In the context of the present description, the term "comprising" should be understood as "including, among others." As such, the term should not be interpreted as "consisting only of."

To better understand the design of the welding jigs and the production process of the present invention, an example frame typically used in aluminium bicycles is described below.

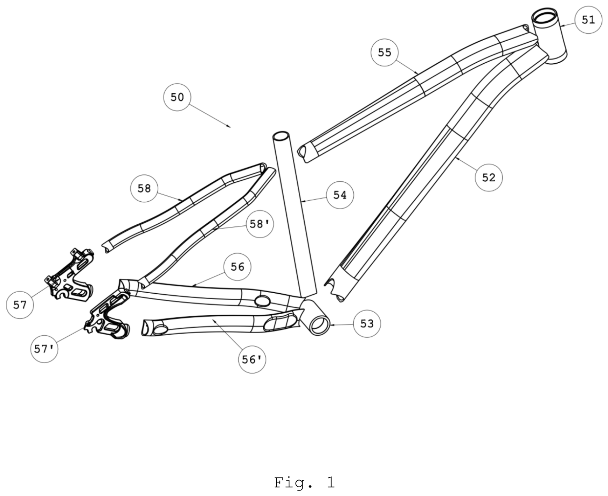

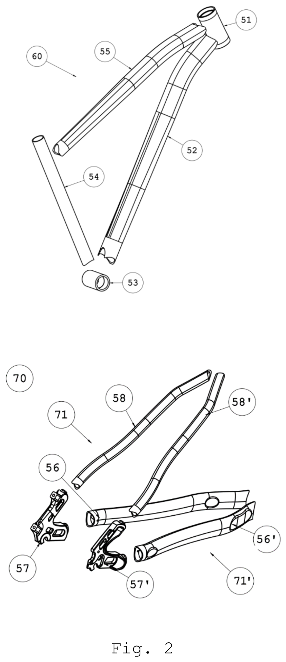

Therefore, Fig. 1 illustrates an exploded representation of a complete bicycle frame (50) and Fig. 2 illustrates its two subcomponents, front (60) and rear (70).

With reference to Fig. 1 and 2, said bicycle frame (50) comprises two main subcomponents:
- a front component (60), which is the part of the frame that will incorporate the handlebars, the front wheel and the bicycle saddle. This front component (60) comprises a handlebar tube (51), a lower tube (52), an upper tube (55), a saddle tube (54) and a crankset centre or motor receiving member (53); and
- a rear component (70), which is the part of the frame opposite the front component (60) and which will receive the rear wheel of the bicycle. This rear component (70) is formed by a left rear component (71) and a right rear component (71'), wherein, in turn, the left rear component (71) consists of a saddle tube (58), a rear wheel support member (57) and a chain tube (56) and the right rear component (71') similarly consists of a saddle tube (58'), a rear wheel support member (57') and a chain tube (56').

The present invention is described below with reference to the accompanying figures.

In order to overcome the technical challenge of developing an integrated, automated, and industrially reproducible production process capable of efficiently and economically producing different models of aluminium bicycle frames, a process and jigs were developed that overcome the aforementioned disadvantages of the conventional welding process. Thus, the invention is based on the development of a robotic system equipped with welding equipment, allowing for optimization of the welding process and based on the aforementioned welding jigs.

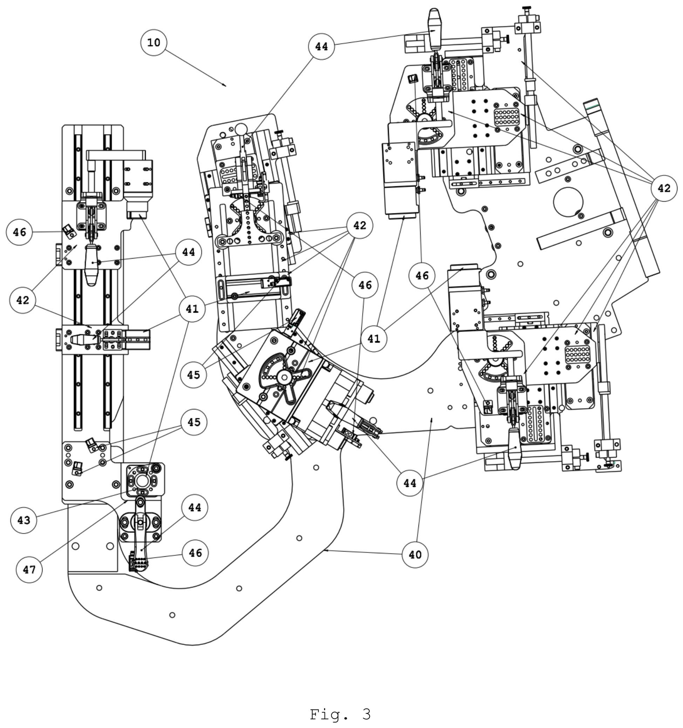

Referring to any one of Fig. 3 to 5, a welding jig (10, 20, 30) according to the present invention comprises:
- a base structure (40);
- at least one displaceable tube gripping module (41) and
- a displacement interface member (42) for each displaceable tube gripping module (41),
wherein said displacement interface member (42) is disposed between the base structure (40) and the respective displaceable gripping module (41) and attached thereto in such a way that, in operation, it provides spatial displacement of the displaceable gripping module (41) relative to the base structure (40).

The welding jig (10, 20, 30) may further comprise at least one fixed tube gripping module (43)
The base structure (40) is preferably made of steel.

The tube gripping modules (41, 43) are used to receive and secure aluminium bicycle frame tubes, in order to join them by welding. Some of the gripping modules (41, 43) are displaceable modules (41) while others are fixed modules (43).

The displacement interface members (42) provide the mechanical interface between the base structure (40) and the gripping modules (41). These interface members (42) are physically arranged between the base structure (40) and the gripping modules (41) and attached thereto in such a way that, in operation, they provide the spatial (three-dimensional) displacement of the gripping modules (41) relative to the base structure (40). In this way, these interface members (42) allow, in a same jig (10, 20, 30), the displaceable gripping modules (41) to be positionally adjusted to accommodate different sizes of tubes of the frame to be produced and thus allow the production of various frame sizes without the need to change jigs. These displacement interface members (42) can take the form of slides, rails and mechanical interference members or others that will be chosen by the specialist.

In one embodiment, the jig (10, 20, 30) also includes fixed interface members (47), which provide the mechanical interface between the base structure (40) and the fixed gripping modules (43), that is, those modules (43) that do not require displacement for fine-tuning. Note that these fixed interface members (47) are not indispensable, since the fixed gripping modules (43) can be directly attached to the base structure (40).

In another embodiment, the jig (10, 20, 30) comprises an actuator (44) for each displacement interface member (42). The function of this actuator (44) is to provide displacement of a respective displacement interface member (42) in order to position the respective gripping module (41) for receiving and fixing a respective tube to be welded. These actuators (44) can be selected from the group of mechanical, hydraulic, electric actuators and combinations thereof. In turn, the actuators (44) can be actuated manually or automatically, according to the implementation chosen by the person skilled in the art.

Preferably, the jig (10, 20, 30) comprises position sensors (46) to detect the position (working or resting) of the actuators (44). The working position of the actuator indicates that the system can start the welding process, while the resting position indicates that the system cannot start. In this way, an automated system will only start the welding process if the actuators (44) are in a predetermined starting position (working position). Indirectly, these position sensors (46) ensure that the gripping modules (41) are also in the intended state (working or resting).

In yet another embodiment, the jig (10, 20, 30) comprises tube presence sensors (45) to detect the presence or absence of a tube in a respective tube gripping module (41, 43). There may be one presence sensor (45) for each gripping module (41, 43) or only in some gripping modules (41, 43) selected in the jig, in which latter case there will be one presence sensor (45) for each gripping module (41, 43) selected.

Preferably there is a communication module in data connection with the presence and position sensors (45) and (46) respectively, which has the function of collecting information from said sensors (45, 46) and sending the respective data to a processing and management device for starting/stopping the equipment/robot that puts the welding process into practice.

In an alternative embodiment, in order to reduce the impact of the thermal influence of welding and to provide stabilization with respect to distortions that may be reflected in the final product, the jigs additionally comprise a cooling device, such as a closed cooling device (water or other coolant), wherein water or other coolant circulates inside channels or conduits designed for this purpose.

As mentioned earlier, the jigs (10, 20, 30) of the invention are adaptable [thanks to said displaceable tube gripping modules (41) and respective displacement interface members (42)] by bicycle size type, because, in this industry, it is necessary to produce bicycles with a wide variety of sizes, depending on the characteristics of the target consumer, for example, the user's height.

This feature of adaptability is very important, since the same set of jigs can be used to produce a wide range of different bicycle frames, even allowing for the necessary adjustments to produce frames with more or less standardized size specifications, depending on the orders of different customers. In this way, it is not necessary to change welding jigs depending on different orders or even to build new jigs to meet less common specifications. This versatility translates into a significant reduction in production costs, as well as a significant increase in efficiency.

In order to enable the automation of the production of aluminium bicycle frames, the present invention provides an aluminium frame production system comprising:
- at least one welding jig (10, 20, 30) as described above;
- at least one welding robot
- at least one welding power source with peripherals thereof and
- a processing and management device for starting or stopping the welding robot.

In a preferred embodiment, the aluminium frame production system comprises 4 welding jigs (10, 20, 20', 30) wherein:
- a first welding jig (10) comprises a fixed tube gripping module (43) and five or six displaceable gripping modules (41);
- a second welding jig (20) comprises eight or nine displaceable gripping modules (41);
- a third welding jig (20'), symmetrical to the second one, comprises eight or nine displaceable gripping modules (41) and
- a fourth welding jig (30) comprises a fixed tube gripping module (43) and at least three displaceable gripping modules (41), and may comprise six displaceable gripping modules (41).

The following describes one embodiment of the production process of an aluminium frame (50), according to the present invention. The process comprises the following welding steps:
- Step 1 - Welding of the tubes (51), (52), (54), (55) and the crankset centre or motor receiving member (53). At the end of this step of the process, the front component (60) of the frame (50) is completed;
- Step 2 - welding of the tubes (56) and (58) and the rear wheel support member (57), resulting in a left rear component (71);
- Step 3 - welding of the tubes (56') and (58') and the rear wheel support member (57'), resulting in a right rear component (71');
- Step 4 - Welding of the front component (60) produced in Step 1 to the left rear component (71) and right rear component (71'), respectively from step 2 and step 3. At the end of this step 4 the complete frame (50) is completed.

Each of the welding Steps mentioned above is performed using a different jig, as will be explained in more detail below.

Although welding steps 2 and 3 are represented herein as distinct steps, since they give rise to two distinct components, these steps are preferably performed simultaneously in order to optimize the efficiency of the process.

Similarly, steps 2 and 3 are more preferably performed simultaneously with step 1.

Only step 4 needs to be performed after steps 1, 2, and 3, as it requires the components resulting from the latter steps to begin.

Therefore, in a preferred embodiment, welding steps 1, 2 and 3 begin simultaneously, and their resulting products are then sent to Step 4.

The welding procedure itself is performed automatically by welding robots.

In this regard, the development of the jigs of the invention has made it possible to robotize the welding process and ensured a versatility and precision in the welding steps that was not within the reach of prior art systems. In this way, the jigs of the invention enable the application of an automated/robotic welding process that did not exist in the prior art.

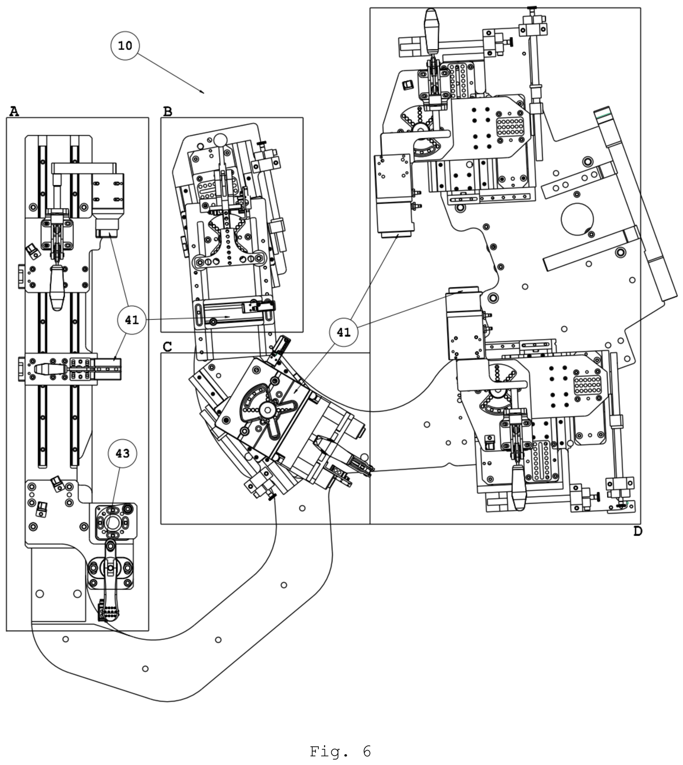

Fig. 3 and 6 show an embodiment of a jig (10) used in Step 1, in which the aforementioned front component (60) of the aluminium frame (50) is produced.

Referring now to Fig. 6, this jig (10) is composed of 4 zones indicated as A, B, C and D. If the aluminium frame (50) does not contain the upper tube (55), zone B is dispensable or is not used during the production process.

It should be noted that, in the present description, the term "zone" or "zones" refers to surface areas of the jig, in particular its base structure (40), in which there are arranged displaceable (41) and/or fixed (43) tube gripping modules, which allow the gripping of the tubes of interest for the production of the front component (60) of the frame (50), as well as its right (71') and left (71) rear components and, finally, for the joining of these components to complete the final integral formation of the frame (50).

Therefore, still referring to Fig. 6, zone A comprises a fixed module (43) which constitutes a "point 0" or also called a reference point, relative to the displaceable modules (41) present in the same zone A and in the other zones B, C and D of the jig (10). Zone A further comprises 2 displaceable modules (41). In this zone A, the fixed module (43) receives the crankset centre or motor receiving member (53) from the frame (50). The displaceable modules (41), in turn, receive the saddle tube (54).

As for zone B, it comprises a displaceable gripping module (41), which receives the upper tube (55) of the frame (50), if such tube (55) exists.

With regard to zone C, it comprises a displaceable gripping module (41), which receives the lower tube (52) of the frame (50).

Finally, with regard to zone D, it comprises 2 displaceable gripping modules (41), which receive the handlebar tube (51) from the frame (50).

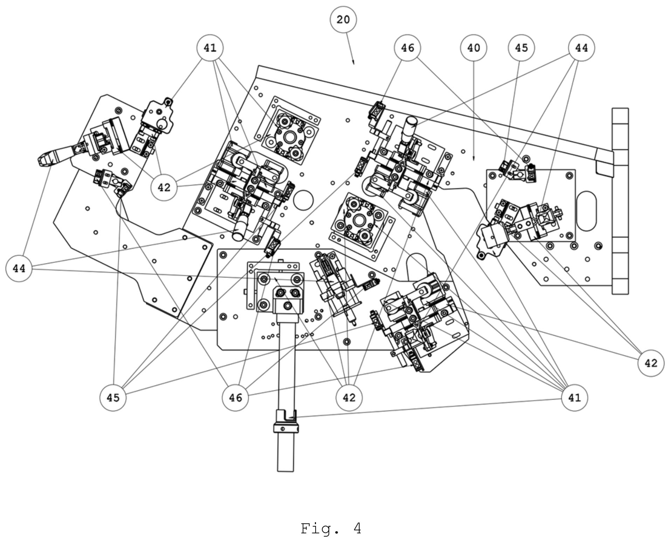

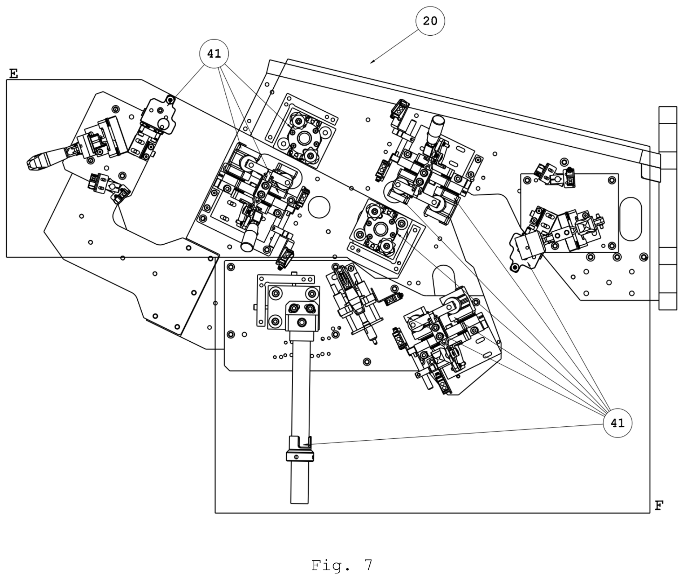

Fig. 4 and 7 show the jig (20) used in Step 2 of the process of the invention. This jig (20) is composed of 2 zones E and F, as shown in Fig. 7.

Zone E contains 3 displaceable gripping modules (41). The first gripping module (41) (leftmost in Fig. 7) receives the rear wheel support member (57), while the two remaining gripping modules (41) receive the chain tube (56).

In an alternative embodiment, zone E contains only 2 displaceable gripping modules (41), a first one to receive the rear wheel support member (57) and a second one to receive the chain tube (56).

As for said zone F, it comprises 6 displaceable gripping modules (41), which receive the rear wheel support member (57) and the chain tube (56), which come already welded from zone E, and also receive the saddle tube (58) which will be welded to the rear wheel support member (57).

It should be noted that depending on more specific characteristics of each frame (50) to be produced, such as, for example, the size of the frame and the need for holes in it, among others, the number of displaceable gripping modules (41) present in zone F may differ from that referred to for the present particular embodiment. The skilled in the art, possessing the information contained in the present description and confronted with such characteristics of the frame to be produced, will be able to interpret the appropriate number of displaceable gripping modules (41) to be included in the jig (20).

It should also be noted, in the context of the process of the invention, that for Step 3 there will be a second jig (20') identical and symmetrical to the jig (20) presented above, wherein the jig (20) allows the production of the left rear component (71) and the jig (20') allows the production of the right rear component (71'), or vice versa, so further description relating to the jig (20') is unnecessary.

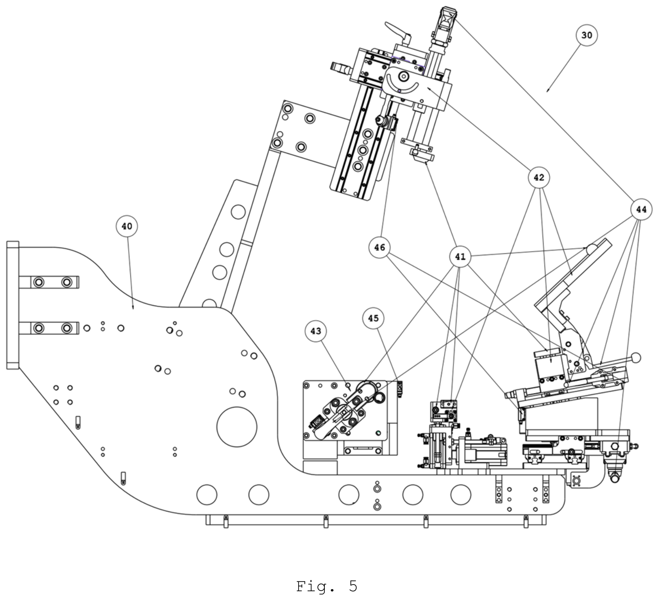

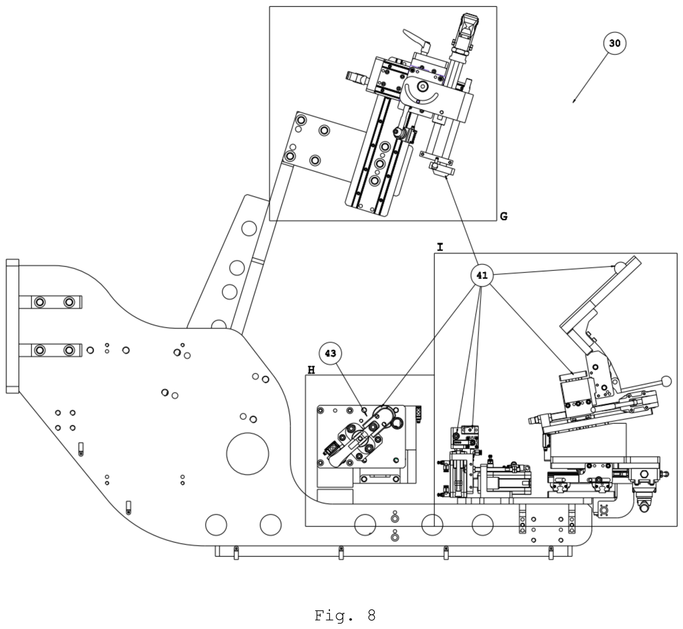

The frame (50) is finalized in the aforementioned Step 4 of the production process, using the jig (30) shown in Fig. 5 and 8.

Referring to Fig. 8, this third jig (30) comprises 3 zones, marked in the figure as G, H and I.

Zone G comprises 1 displaceable gripping module (41) that receives the saddle tube (54) coming from Stage 1 carried out in the jig (10), in which the front component (60) of the frame was formed, consisting of its members identified as (51), (52), (53), (54) and (55), welded together, and in which a second end of the saddle tube (54) is welded to the crankset centre or motor receiving member (53).

In practice, the entire front component assembly (60) of the frame (50) is secured between zones G and H of the jig (30), that is, in zone G, said front component (60) is secured by means of a first free end of the saddle tube (54) retained in its displaceable gripping module (41) and, in zone H (described in the following paragraph), by means of the crankset centre or motor receiving member (53).

In turn, zone H comprises 1 fixed gripping module (43) which receives and retains the crankset centre or motor receiving member (53). Optionally, this zone H may also comprise a displaceable gripping module (41) as shown in Fig. 8.

In this way, due to zone G comprising 1 displaceable gripping module (41), this module will allow adjusting the welding process to different saddle tube (54) lengths and, consequently, to different final frame sizes.

Finally, with regard to zone I, it comprises two displaceable gripping modules (41), wherein one of them receives and secures the left rear component (71) resulting from welding Step 2 [that is, coming from jig (20)] and the other receives and secures the right rear component (71') resulting from welding Step 3 [that is, coming from jig (20')]. Optionally, this zone I may additionally comprise a third and even a fourth displaceable gripping module (41), as shown in the embodiment of Fig. 8 which shows four displaceable gripping modules (41) in this zone I.

With the present invention it is possible to stabilize and robotize the production process of aluminium bicycle frames, resulting in improved quality in the final product and simultaneously eliminating the accumulation of errors in the product, typical of manual processes, both geometrically and visually.

In addition to the significant technical improvements that the invention provides compared to the previous art, a user, through visual observation, immediately identifies the improvement in production quality, since automatic welding is immediately perceived as distinct from manual welding, providing technical and aesthetic value for the user.

The description presented herein resorts to preferred embodiments and, as such, should be understood as exemplary and not limiting the scope of the present invention, which is defined in the claims attached.

## Claims

1. Welding jig (10, 20, 30), **characterized in that** it comprises:
• a base structure (40);
• at least one displaceable tube gripping module (41) and
• a displacement interface member (42) for each displaceable tube gripping module (41),
wherein said displacement interface member (42) is disposed between the base structure (40) and the respective displaceable gripping module (41) and attached thereto in such a way that, in operation, it provides spatial displacement of the displaceable gripping module (41) relative to the base structure (40).

2. Welding jig (10, 20, 30) according to claim 1, **characterized in that** it further comprises at least one fixed tube gripping module (43).

3. Welding jig (10, 20, 30) according to claim 1, **characterized in that** it comprises an actuator (44) for each displacement interface member (42).

4. Welding jig (10, 20, 30) according to claim 3, **characterized in that** said actuator (44) is selected from the group consisting of manual, mechanical, hydraulic, electric actuators and combinations thereof.

5. Welding jig (10, 20, 30) according to claim 3 or 4, **characterized in that** it comprises a position sensor (46) for each actuator (44).

6. Welding jig (10, 20, 30) according to claim 1 or 2, **characterized in that** it comprises at least one tube presence sensor (45).

7. Welding jig (10, 20, 30) according to claim 5 or 6, **characterized in that** it comprises a data communication module connected to the tube presence (45) and position (46) sensors.

8. Welding jig (10, 20, 30) according to any one of claims 1 to 7, **characterized in that** it comprises a cooling device, preferably a closed water or other coolant cooling device.

9. Aluminium bicycle frame production system, **characterized in that** it comprises:
• at least one welding jig (10, 20, 30) as claimed in any one of claims 1 to 8;
• at least one welding robot;
• at least one welding power source with peripherals thereof;
• a processing and management device for starting or stopping the welding robot.

10. Production system according to claim 9, **characterized in that** it comprises four welding jigs (10, 20, 20', 30) wherein:
• a first welding jig (10) comprises a fixed tube gripping module (43) and five or six displaceable gripping modules (41);
• a second welding jig (20) comprises eight or nine displaceable gripping modules (41);
• a third welding jig (20'), symmetrical to the second one, comprises eight or nine displaceable gripping modules (41) and
• a fourth welding jig (30) comprises a fixed tube gripping module (43) and at least three displaceable gripping modules (41), preferably comprising six displaceable gripping modules (41).

11. Production process of an aluminium bicycle frame (50), **characterized in that** it comprises the following steps:
• Step 1: producing a front frame component (60), in a welding jig (10) of the system of claim 10, by welding a handlebar tube (51), a lower tube (52), an upper tube (55), a saddle tube (54) and a crankset centre or motor receiving member (53);
• Step 2: producing a left rear frame component (71), in a welding jig (20) of the system of claim 10, by welding a saddle tube (58), a rear wheel support member (57) and a chain tube (56);
• Step 3: producing a right rear frame component (71'), in a welding jig (20') of the system of claim 10, by welding a saddle tube (58'), a rear wheel support member (57') and a chain tube (56') and
• Step 4: producing the integral frame (50), in a welding jig (30) of the system of claim 10, by welding the front component (60), left rear component (71) and right rear component (71').

12. Production process of an aluminium bicycle frame (50), according to claim 11, **characterized in that** Steps 2 and 3 are performed simultaneously.

13. Production process of an aluminium bicycle frame (50), according to claim 11, **characterized in that** Steps 1, 2 and 3 are carried out simultaneously.
